# EUROPÄISCHE PATENTANMELDUNG

(11) **EP 4 043 854 A1**
(43) Veröffentlichungstag der Anmeldung: **17.08.2022**
(21) Anmeldenummer: 21157316.7
(22) Anmeldetag: 16.02.2021
(51) Int. Cl.: G01M 13/025, G01M 13/022, G01M 13/026

(54) **PRÜFUNG VON PLANETENGETRIEBEN OHNE PLANETENTRÄGERLAGERUNG**

(71) Anmelder: Flender GmbH, 46395 Bocholt (DE)
(72) Erfinder: Hambrecht, Ralf, 46399 Bocholt (DE)
(74) Vertreter: Michalski Hüttermann & Partner Patentanwälte mbB

(57) **Zusammenfassung**

Die Erfindung betrifft einen Prüfstand (1) zum Prüfen eines Planetengetriebes (2). Zur Nutzung des Prüfstands (1) für ein planetenträgerlagerungsfreies Planetengetriebe (2) wird vorgeschlagen, dass der Prüfstand (1) eine zentrale Lagereinheit (3) aufweist, wobei die zentrale Lagereinheit (3) ausgebildet ist, einen Planetenträger (4) einer ersten Stufe des Planetengetriebes (2) drehbar zu lagern, wobei die zentrale Lagereinheit (3) ferner dazu ausgebildet ist, ein Hohlrad (5) des Planetengetriebes (2) gegenüber dem Planetenträger (4) zu zentrieren. Ferner betrifft die Erfindung einen Prüfaufbau (10) mit einem derartigen Prüfstand (1) und einem zu prüfenden Planetengetriebe (2), wobei die zentrale Lagereinheit (3) den Planetenträger (4) der ersten Stufe des zu prüfenden Planetengetriebes (2) drehbar lagert, wobei die zentrale Lagereinheit (3) das Hohlrad (5) des zu prüfenden Planetengetriebes (2) gegenüber dem Planetenträger (4) zentriert. Weiter betrifft die Erfindung ein Verfahren zum Prüfen eines Planetengetriebes (2) mittels eines derartigen Prüfstandes (1) oder zum Betreiben eines derartigen Prüfaufbaus (10), wobei eine Testlast mit Hilfe des Flansches (6) von dem Hohlrad (5) auf das Gehäuse der zentralen Lagereinheit (3) übertragen wird.

## Beschreibung

Die Erfindung betrifft einen Prüfstand zum Prüfen eines Planetengetriebes. Ferner betrifft die Erfindung einen Prüfaufbau mit einem derartigen Prüfstand und einem zu prüfenden Planetengetriebe. Die Erfindung betrifft weiter ein Verfahren zum Prüfen eines Planetengetriebes mittels eines derartigen Prüfstandes oder zum Betreiben eines derartigen Prüfaufbaus.

Moderne Planetengetriebe, insbesondere bei der Anwendung in Windkraftanlagen, werden zum Teil als Module in integrierten Systemen entwickelt. Bei derartigen Systemen besitzt das Getriebe in der langsam laufenden Planetenstufe teilweise keine Planetenträgerlagerung mehr. Diese Planetengetriebe werden auch als planetenträgerlagerungsfrei bezeichnet. Dies hat zur Konsequenz, dass sie als eigenständiges Modul nicht auf den bisher bekannten Prüfständen getestet werden können und damit nur im System auf Spezialprüfständen mit hohen Investitionskosten geprüft werden können. Gleiches gilt für zukünftige Servicefälle von Planetengetrieben ohne Planetenträgerlager. Diese sind zukünftig nicht ohne das System auf Prüfstanden wie beispielsweise den Standard Windgetriebe-Prüfständen zu testen.

Bisher wurde aufwändig im System getestet oder die Planetengetriebe hatten eigene Planetenträgerlagerungen.

Unter einer Getriebeprüfung sind insbesondere Tests zu verstehen, bei denen mindestens eine Drehbewegung, ein Drehmoment, ein Biegemoment oder eine Kombination daraus auf das Getriebe, insbesondere das Planetengetriebe, aufgebracht werden. Diese Belastungen werden auch als Testlasten bezeichnet.

Der Erfindung liegt die Aufgabe zugrunde, eine Prüfmöglichkeit für ein planetenträgerlagerungsfreies Planetengetriebe anzugeben.

Die Aufgabe wird durch einen Prüfstand zum Prüfen eines Planetengetriebes gelöst, wobei der Prüfstand eine zentrale Lagereinheit aufweist, wobei die zentrale Lagereinheit ausgebildet ist, einen Planetenträger einer ersten Stufe des Planetengetriebes drehbar zu lagern, wobei die zentrale Lagereinheit ferner dazu ausgebildet ist, ein Hohlrad des Planetengetriebes gegenüber dem Planetenträger zu zentrieren. Ferner wird die Aufgabe durch einen Prüfaufbau mit einem derartigen Prüfstand und einem zu prüfenden Planetengetriebe gelöst, wobei die zentrale Lagereinheit den Planetenträger der ersten Stufe des zu prüfenden Planetengetriebes drehbar lagert, wobei die zentrale Lagereinheit die das Hohlrad des zu prüfenden Planetengetriebes gegenüber dem Planetenträger zentriert. Die Aufgabe wird weiter durch ein Verfahren zum Prüfen eines Planetengetriebes mittels eines derartigen Prüfstandes oder zum Betreiben eines derartigen Prüfaufbaus gelöst, wobei eine Testlast mit Hilfe eines Flansches von dem Hohlrad auf das Gehäuse der zentralen Lagereinheit übertragen wird.

Weitere vorteilhafte Ausgestaltungen der Erfindung sind in den abhängigen Ansprüchen angegeben.

Der Erfindung liegt unter anderem die Erkenntnis zugrunde, dass durch die Verwendung der vorgeschlagenen zentralen Lagereinheit auch das Testen und Prüfen eines planetenträgerlagerungsfreien Planetengetriebes möglich ist. Dabei kann das das Planetengetriebe, das für die Prüfung vorgesehen ist, als planetenträgerlagerungsfreies Planetengetriebe ausgeführt sein. Durch die Möglichkeit der Lagerung der ersten Stufe eignet sich der Prüfstand bzw. der Prüfaufbau im Besonderen für die Messungen und Tests an einem planetenträgerlagerungsfreien Planetengetriebe. Die zentrale Lagereinheit ist eine getriebeexterne Vorrichtung des Prüfstandes. Diese zentrale Lagereinheit lagert den Planetenträger der ersten Planetenstufe des zu prüfenden Planetengetriebes. Darüber hinaus zentriert die zentrale Lagereinheit das entsprechende Hohlrad bzw. die jeweiligen Hohlräder beim Prüfen mehrerer Planetengetriebe gegenüber dem Planetenträger bzw. den jeweiligen Planetenträgern. Der Flansch dient zur Anbindung des Hohlrades, um vom Hohlrad auf den feststehenden Teil der zentralen Lagereinheit, wie beispielsweise dem Gehäuse der zentralen Lagereinheit, eine Testlast zu übertragen. Der Flansch ist also zwischen der zentralen Lagereinheit und dem Planetengetriebe angeordnet. Der Flansch kann dabei dem Getriebe oder der zentralen Lagereinheit zugeordnet werden. Darüber hinaus kann alternativ der Flansch auch als separate Komponente ausgeführt sein, die weder dem Getriebe noch der zentralen Lagereinheit zugeordnet ist. Die Testlasten werden ebenfalls über den Flansch abgestützt. Eine Testlast kann beispielsweise durch ein Drehmoment, eine Gewichtslast und/oder einem Biegemoment gebildet werden. Die Drehmomentrückführung aus dem Hohlrad in die Umgebungskonstruktion erfolgt dabei in vorteilhafter Weise über das Gehäuse der zentralen Lagereinheit und wird von dort weiter in einen geschlossenen Rahmen zu elektrischen Maschinen des Prüfstands oder in das Fundament, insbesondere in das Fundament der zentralen Lagereinheit, eingeleitet.

Auf das Testen mit aufwändigen Komplettsystemprüfungen kann verzichtet werden. Dazu können mit dem vorgeschlagenen Prüfstand bzw. Prüfaufbau bereits bestehende Prüfstände auf einfache Weise mit einer zentralen Lagereinheit ausgerüstet werden und für die Prüfung der modernen planetenträgerlagerlosen Getriebe eingesetzt werden. Der Platzbedarf zwischen den Verspannsystemen ist um die Hälfte geringer und die zu handhabenden Gewichte sind ebenfalls um mehr als die Hälfte reduziert. Die zentrale Lagereinheit ist somit Teil des Prüfstands und braucht nicht mit dem zu prüfenden Planetengetriebe gewechselt werden.

Die Anordnung des Prüfstands, des Prüfaufbaus und das Verfahren eignen sich in besonderer Weise für das Planetengetriebe einer Windkraftanlage. Diese Getriebe werden in relativ großer Stückzahl produziert und die Anforderungen an die Zuverlässigkeit sind wegen der Anordnung des Planetengetriebes im Turm einer Windkraftanlage besonders hoch. Darüber hinaus gibt es auch zahlreiche Anforderungen bezüglich einer Zertifizierung, die Tests unter definierten Randbedingungen erfordern. Diese Randbedingungen können auf dem Prüfstand bzw. an dem Prüfaufbau eingestellt werden, so dass sich dieser Prüfstand bzw. dieser Prüfaufbau im besonderen Maße für Messungen und Tests an einem Planetengetriebe für Windkraftanwendungen eignet und vorteilhaft ist.

Bei einer vorteilhaften Ausgestaltung der Erfindung ist der Prüfstand als eine back-to-back Anordnung ausgeführt. Mit dieser Anordnung ist es möglich, gleichzeitig zwei Planetengetriebe zu prüfen. Der Prüfstand ist bei dem back-to-back Aufbau symmetrisch bezüglich der zentralen Lagereinheit ausgeführt. Auch die zentrale Lagereinheit ist in diesem Fall symmetrisch ausgeführt. An beiden Seiten der zentralen Lagereinheit wird jeweils das Hohlrad gegenüber dem Planetenträger gelagert, wobei der Prüfstand an beiden Seiten jeweils einen Flansch am Gehäuse der zentralen Lagereinheit aufweist, um den Planetenträger anzubinden. Alternativ kann der Flansch auch am Planetengetriebe, insbesondere am Planetenträger angeordnet sein und diesen mit der zentralen Lagereinheit verbinden. Somit werden für die back-to-back Anordnung auch zwei elektrische Maschinen vorgesehen, zwischen denen die beiden Planetengetriebe und die zentrale Lagereinheit vorteilhafterweise symmetrisch angeordnet sind. Dabei ist festzuhalten, dass die elektrischen Maschinen nicht zwangsläufig mit dem Fundament verbunden sein müssen. Sondern auch in der Form des HybridDrives (Getriebe-Generator Kombination) angekoppelt und getestet werden können. Dabei ergibt sich kein Rückfluss des Antriebsmomentes über das Fundament, sondern über die Gehäuse.

Auch bei dieser Anordnung erfolgt die Drehmomentrückführung aus dem Hohlrad in die Umgebungskonstruktion in vorteilhafter Weise über das Gehäuse der zentralen Lagereinheit und wird von dort weiter in einen geschlossenen Rahmen zu elektrischen Maschinen des Prüfstands oder in das Fundament, insbesondere in das Fundament der zentralen Lagereinheit, eingeleitet. In der vorliegenden back-to-back kann das Hauptabstützmoment über das Gehäuse der zentralen Lagereinheit mit dem Gegenhaltemoment des zweiten Prüflings eliminiert werden. Damit werden dann nur die Antriebs- und Bremsmomente der elektrischen Maschine, neben den Gewichtslasten, über das Fundament abgestützt.

Im Folgenden wird die Erfindung anhand der in den Figuren dargestellten Ausführungsbeispiele näher beschrieben und erläutert. Es zeigen:
- FIG 1: einen Prüfstand und
- FIG 2: einen Prüfaufbau.

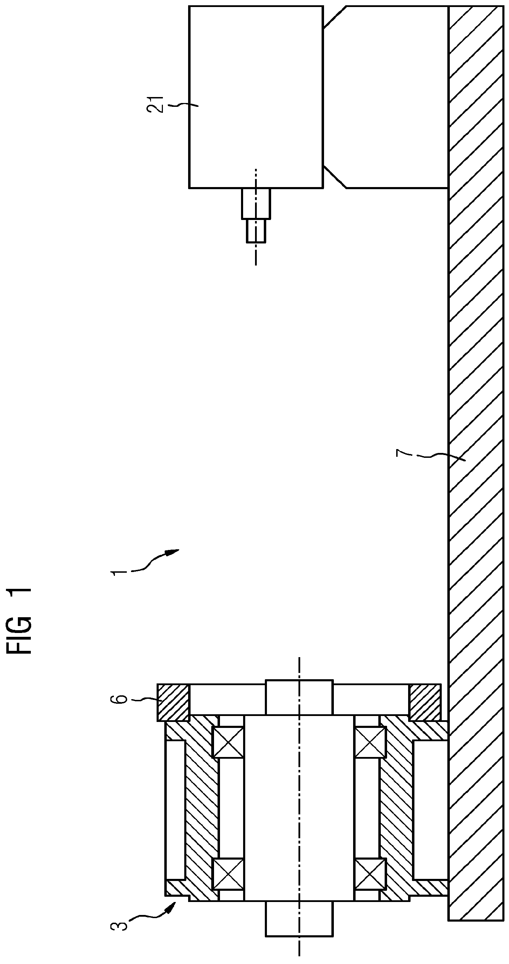

Die FIG 1 zeigt einen Prüfstand 1 zur Prüfung eines hier nicht dargestellten, planetenträgerlagerungsfreien Planetengetriebes 2. Eine zentrale Lagereinheit 3 ist dazu vorgesehen, mit dem Planetengetriebe 2 verbunden zu werden und es zu halten und zentrieren. Da das Halten die Rotation ermöglicht, wird es auch als drehbar halten, oder kurz lagern bezeichnet. Zur weiteren Verbindung der zentralen Lagereinheit 3 mit dem Planetengetriebe 2 dient unter anderem ein Flansch 6 an der zentralen Lagereinheit 3 oder am Planetengetriebe 2. Der Flansch 6 verbindet das hier nicht dargestellte Hohlrad 5 des Planetengetriebes 2 mit der zentralen Lagereinheit 3. Die Drehmomentrückführung aus dem Hohlrad 5 des Planetengetriebes kann dadurch über das Gehäuse der zentralen Lagereinheit 3 in das Fundament 7 erfolgen. Der Prüfstand 1 weist zudem eine elektrische Maschine 21 auf, mit der das Planetengetriebe 2 mit einem Drehmoment belastet werden kann.

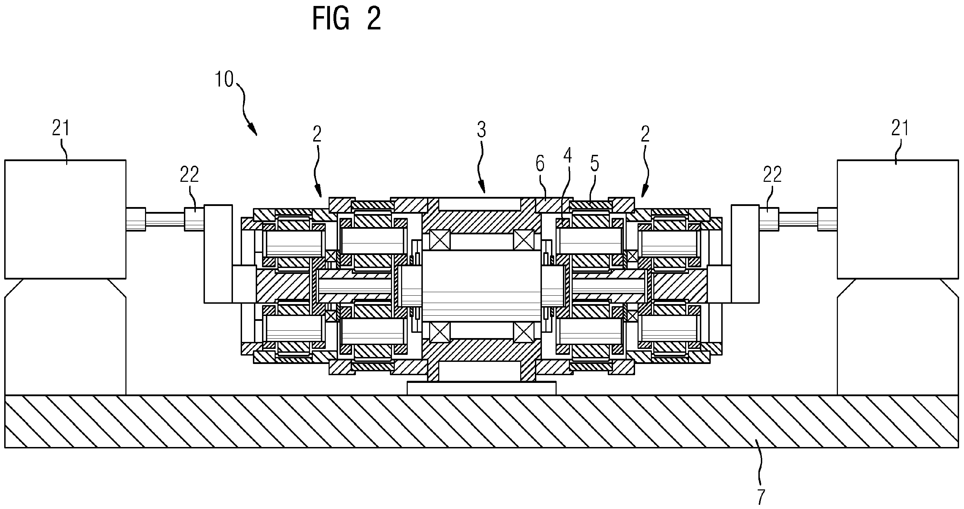

Die FIG 2 zeigt einen Prüfaufbau 10 an einem Prüfstand 1. Zur Vermeidung von Wiederholungen wird auf die Beschreibung zur FIG 1 sowie auf die dort eingeführten Bezugszeichen verwiesen. Das Planetengetriebe 2 ist über ein Prüfstandsgetriebe 22 mit der elektrischen Maschine 21 verbunden. Das Prüfstandsgetriebe 22 ist jedoch nur optional vorhanden und muss nicht unbedingt Teil des Prüfaufbaus 10 sein. Falls die elektrische Maschine 21 in ihrer Ausgestaltung den erforderlichen Drehmoment- und Drehzahlbereich abdeckt, kann auf ein Prüfstandsgetriebe 22 verzichtet werden. Dies ist insbesondere bei mittelschnellen elektrischen Maschinen der Fall. Dann ist auch eine konzentrische Anbindung der elektrischen Maschine 21 möglich. Die andere Seite des Planetengetriebes 2 ist mit der zentralen Lagereinheit 3 verbunden, so dass der Planetenträger 4 drehbar gelagert wird. Das Hohlrad 5 des Planetengetriebes 2 wird mittels einem Flansch 6 mit der zentralen Lagereinheit 3 verbunden und kann darüber auch die Drehmomentrückführung bis in das Fundament 7 sicherstellen.

Der dargestellte Aufbau entspricht einer back-to-back Anordnung, bei der zwei Planetengetriebe 2 geprüft werden können. Der Prüfstand 10 ist dabei symmetrisch aufgebaut, so dass auch eine zweite elektrische Maschine 21 und ein zweites Prüfstandsgetriebe 22 vorhanden sind. In der Mitte befindet sich die zentrale Lagereinheit 3, die die Planetenträger 4 der beiden Planetengetriebe 2 lagert. Somit sind beide Planetengetriebe 2 über die zentrale Lagereinheit 3 miteinander verbunden.

Zusammenfassend betrifft die Erfindung einen Prüfstand zum Prüfen eines Planetengetriebes. Zur Nutzung des Prüfstands für ein planetenträgerlagerungsfreies Planetengetriebe wird vorgeschlagen, dass der Prüfstand eine zentrale Lagereinheit aufweist, wobei die zentrale Lagereinheit ausgebildet ist, einen Planetenträger einer ersten Stufe des Planetengetriebes drehbar zu lagern, wobei die zentrale Lagereinheit ferner dazu ausgebildet ist, ein Hohlrad des Planetengetriebes gegenüber dem Planetenträger zu zentrieren. Ferner betrifft die Erfindung einen Prüfaufbau mit einem derartigen Prüfstand und einem zu prüfenden Planetengetriebe, wobei die zentrale Lagereinheit den Planetenträger der ersten Stufe des zu prüfenden Planetengetriebes drehbar lagert, wobei die zentrale Lagereinheit das Hohlrad des zu prüfenden Planetengetriebes gegenüber dem Planetenträger zentriert. Weiter betrifft die Erfindung ein Verfahren zum Prüfen eines Planetengetriebes mittels eines derartigen Prüfstandes oder zum Betreiben eines derartigen Prüfaufbaus, wobei eine Testlast mit Hilfe des Flansches von dem Hohlrad auf das Gehäuse der zentralen Lagereinheit übertragen wird.

## Patentansprüche

1. Prüfstand (1) zum Prüfen eines Planetengetriebes (2), wobei der Prüfstand (1) eine zentrale Lagereinheit (3) aufweist, wobei die zentrale Lagereinheit (3) ausgebildet ist, einen Planetenträger (4) einer ersten Stufe des Planetengetriebes (2) drehbar zu lagern, wobei die zentrale Lagereinheit (3) ferner dazu ausgebildet ist, ein Hohlrad (5) des Planetengetriebes (2) gegenüber dem Planetenträger (4) zu zentrieren.

2. Prüfaufbau (10) mit einem Prüfstand (1) nach Anspruch 1 und einem zu prüfenden Planetengetriebe (2), wobei die zentrale Lagereinheit (3) den Planetenträger (4) der ersten Stufe des zu prüfenden Planetengetriebes (2) drehbar lagert, wobei die zentrale Lagereinheit (3) das Hohlrad (5) des zu prüfenden Planetengetriebes (2) gegenüber dem Planetenträger (4) zentriert.

3. Prüfaufbau (10) nach Anspruch 2, wobei der Prüfaufbau (10) als eine back-to-back Anordnung ausgeführt ist.

4. Verfahren zum Prüfen eines Planetengetriebes (2) mittels eines Prüfstandes (1) nach Anspruch 1 oder zum Betreiben eines Prüfaufbaus (10) nach einem der Ansprüche 2 oder 3, wobei eine Testlast mit Hilfe eines Flansches (6) von dem Hohlrad (5) auf das Gehäuse der zentralen Lagereinheit (3) übertragen wird.

5. Verfahren nach Anspruch 4, wobei eine Drehmomentrückführung aus dem Hohlrad (5) über das Gehäuse der zentralen Lagereinheit (3) in ein Fundament (7) der zentralen Lagereinheit (3) erfolgt.
